# EUROPEAN PATENT SPECIFICATION

(11) **EP 0 612 379 B1**
(45) Date of publication and mention of the grant of the patent: **12.03.1997**
(21) Application number: 92922963.1
(22) Date of filing: 11.11.1992
(51) Int. Cl.: F16C 13/02, B65G 43/02

(54) **BEARING ALARM**
WARNSYSTEM AN EINEM LAGER
ALARME DE PALIER

(30) Priority: 11.11.1991 GB 9123936
(43) Date of publication of application: 31.08.1994
(73) Proprietor: HUWOOD INTERNATIONAL LIMITED, Gateshead, Tyne & Wear NE11 0LP (GB)
(72) Inventor: RICHMOND, Allan, Highfield, Newcastle-Upon-Tyne NE5 5JH (GB)
(74) Representative: Szczuka, Jan Tymoteusz
(86) International application number: GB9202090
(87) International publication number: WO9310365

(56) References cited:
- GB-A- 2 155 678
- GB-A- 2 250 785
- US-A- 4 148 271

## Description

The present invention relates to a rotatable bearing with an alarm system suitable for use with rollers and other rotary mechanisms having relatively rotatable parts with the bearing therebetween.

The invention relates particularly to a device which gives an indication that a bearing is overheating and thereby gives an early indication of possible bearing failure. When a bearing is contaminated by dirt or moisture and/or is rotated with insufficient lubricant or an excess or lubricant and/or is overloaded, the bearing temperature generally increases progressively until eventually it is well above the normal working temperature of the bearing. Such increases in temperature are generally a symptom of impending bearing collapse or seizure which may cause damage to other components in a machine. Furthermore as a bearing overheats it may reach a temperature whereby it ignites surrounding material and it is therefore highly desirable to obtain early warning of such problems.

Conventional monitoring of rollers bearings by maintenance personnel or by instrumentation has generally been found to be either impractical or prohibitively expensive.

It has previously been proposed (GB-A-2 155 678) to utilize a thermal release device which trips when the temperature exceeds a control temperature, and whose position is sensed by a sensing means which transmits a signal to a central monitoring unit. In this case though the thermal release device is mounted radially of the bearing. This presents considerable practical difficulties in relation to installation in many situations such as in conveyor rollers and further substantial difficulties in relation to monitoring of the tripping of the device since the annular zone around the bearing and thermal release device is often obstructed in one way or another in such situations e.g. by the outer roller casing, conveyor belt supported thereby, bulk material carried on the belt etc. It is an object of the present invention to avoid or minimise one or more of the above disadvantages.

The present invention provides a rotatable bearing with an alarm system suitable for use in warning of overheating in the rotatable bearing and comprising first and second bearing portions, said alarm system comprising an alarm signal generator means having a thermally activated engagement element provided on at least one of said first bearing portion and a body connected thereto so as to be in thermal connection with said bearing portion and provided with driving means for driving the element upon reaching a predetermined elevated temperature, from a first primed retracted position into a second deployed extended alarm position for producing a distinctive signal wherein at least one of said second bearing portion and a body connected thereto is provided with an engaging portion of the alarm system, the distance through which the driving means drives the engagement element from the primed retracted position to the deployed extended alarm position, and the distance at which, in the primed retracted po-sition, the engagement element is spaced from the engaging portion, being such that, in the deployed extended alarm position, the engagement element makes at least intermittent contact with said engaging portion during relative rotation between said first and second bearing portions without substantially preventing continuing relative rotation of said bearing portions, and is formed and arranged so as to produce from its contact with said engaging portion a said distinctive alarm signal, indicating that said bearing has exceeded said predetermined temperature, and wherein said engagement element is mounted for displacement between its retracted and extended positions, generally axially of the rotatable bearing.

Preferably at least one of said engagement element and engaging portion has an acoustic element formed and arranged at a substantially external portion of the bearing portions and any said bodies connected thereto so as to transmit to the exterior of said bearing portions and any bodies connected thereto, upon contacting of the engaging portion by the engagement element, a substantial acoustic distinctive alarm signal.

Thus the engagement element is mounted for displacement between its retracted and extended positions in a direction which is generally parallel to the rotational axis of the bearing, conveniently more or less substantially offset from said rotational axis.

It will be appreciated that various forms of alarm signal generator means may be used in accordance with the present invention. Thus there may be used a signal generator means having an engaging portion in the form of one or more generally axially extending projections on said second bearing portion or body connected thereto which is (are) periodically struck by the deployed engagement element as the bearing portions rotate relative to one another, so as to generate a form of more or less audible "clicking" sound, at least one of the engagement element and the projection(s) preferably being resiliently deflectable so as to permit continued alarm signal generation over an extended period of time without damage to the parts.

In another alternative form of the invention there could be used an engaging portion in the form of an at least partially angularly extending surface for providing an extended period or periods of frictional interengagement, said engagement element and engaging portion being formed and arranged so that said frictional interengagement directly generates an acoustic signal e.g. a screech.

As used herein the expression "acoustic element" indicates any element which upon contacting of the engaging portion by the engagement element is conducive to a greater or lesser extent to the conversion of the energy dissipated by said contacting into an acoustic signal. Thus, for example, in the case of a periodic striking contact the acoustic element could be in the form of a generally bell-shaped member with one or more axially extending projections constituting said engaging portion(s).

Whilst the alarm system is preferably formed and arranged for direct generation of an acoustic alarm signal, there may be used instead sensor means for detecting the contacting of the engagement element and engaging portions by other means e.g. there may be used a piezoelectric sensor for detecting periodic striking contact, said sensor being formed and arranged for transmitting electrical signals generated therein to a suitable circuit for directly or indirectly driving a suitable audible and/or visual alarm device such as a warning bell, siren etc. and/or a flashing light. In general though alarm systems of the invention with direct acoustic alarm signal generation are preferred since these are on the one hand of simpler and more economical construction, and on the other hand are more reliable in operation and facilitate more or less ready localisation of an individual overheating bearing from amongst a group, without the need for extensive communication links to a central control system.

Thus with an alarm system of the present invention a distinctive alarm signal may be generated in a particularly simple, effective, and economic manner upon overheating of a bearing in use of the system so that said overheating bearing may be readily detected and replaced thereby minimising the risk of fire etc. from continued overheating. Moreover by using a generally axially operating configuration of the alarm, the acoustic element may be more or less readily disposed at a substantially external portion of the rotary bearing installation thereby maximising transmission of the acoustic alarm signal to the surrounding area and thereby maximising the ease and speed of detection thereof. Nevertheless if desired additional audio transmission, modulation, amplification and/or relay means may be used in order, still further to enhance the attention - attracting quality of the acoustic alarm signal generated directly by said contact. A further significant advantage of the axially operating configuration and substantially external mounting it permits, is that this considerably facilitates the application of the present invention to existing rotary bearing installations i.e. so-called retro-fitting as will be further explained hereinbelow.

Thus in a further aspect the present invention provides an alarm signal generator means suitable for use in an alarm system of the invention, which alarm signal generator means comprises a thermally activated engagement element formed and arranged so as to be driven upon reaching a predetermined elevated temperature from a first primed retracted position into a second deployed extended alarm position, and having an engagement element support means formed and arranged for mounting of said element to said first bearing portion or body connected thereto in use of the signal generator means so that said engagement element is displaceable from its retracted to its extended position, generally axially of the rotatable bearing, and said support means therefor is restrained against displacement in the opposite direction, said alarm signal generator means also including an engaging portion having an engaging portion support means formed and arranged for supporting said engaging portion on a said second bearing portion or body connected thereto in use of the signal generator means, for positive contacting by the engagement element in its extended position.

One especially useful application of the present invention is to the rollers of belt conveyors, including both idler and driving rollers, particularly for use in potentially hazardous environs such as underground coal mines and the like. The alarm system of the present invention has many other applications, though, in rotary bearings in machinery used in the petrochemical industry, automobiles, elevators, lifts, machine tools, strips, docks, sugar and grain processing, manufacturing, printing, the gas industry etc.

It will be appreciated that various forms and methods of activating and driving said thermally activated engagement element may be employed. Thus for example a bi-metallic strip, a bi-metallic spring or other combinations of at least two elements of materials having different coefficients of expansion may be used as well as a memory metal, a memory strip or spring or other material having shape memory characteristics, may be used wherein the activation and the driving of said engagement element are integrated into a single component. In another form, the activation and the driving functions of said engagement element may be performed by separate means, for example the driving of the engagement element may be by a pre-stressed resilient biasing means e.g. an helical coil spring, which is retained in place by a low melting point alloy plug, wherein the melting point of said alloy plug corresponds to said predetermined elevated temperature, so that when said plug melts it releases the resilient biasing means so as to drive said engagement member into a deployed alarm position.

The engagement element thermal activation means may be formed and arranged for activation at any suitable temperature, conveniently a temperature in the range from 60° to 130°C, for example at a temperature of about 70°C.

By using a distinctive acoustic alarm signal, an overheating bearing may be more or less readily heard by any passing operative without the need for any special procedures thereby substantially simplifying and speeding up the monitoring of conveyor systems for overheating bearings and indeed substantially increasing the likelihood of detection by any passing operative including those engaged in other tasks. Nevertheless, if desired, there may also be provided suitable acoustic signal monitoring equipment for activation of (conveniently remotely situated) suitable alarm means such as warning bells, sirens, klaxons etc. and/or warning lights such as flashing lamps, l.e.d.s etc.

It will be understood that bearings in normal use will cause a certain amount of background noise (which may be acoustic in nature and/or in the form of periodic mechanical strain), however, in accordance with the present invention a failed bearing will produce a distinctive warning signal in a generally stepwise increment above any background noise and which thus may be readily detected.

It should also be understood that the present invention may be employed with any form of rotary bearing from integrally formed bearing means which simply comprise complementary male and female cylindrical surface portions of two relatively rotating bodies such as a cylindrical shaft and a plain annular wheel or roller mounted directly thereon, to discrete rotary bearing systems formed and arranged for mounting between two bodies which are required to be relatively rotatable. Accordingly each of the alarm components may be mounted on a said body or on a respective discrete bearing component mounted thereto.

Further preferred features and advantages of the present invention will appear from the following detailed description given by way of example of some preferred embodiments illustrated with reference to the accompanying drawings in which:-
Fig. 1 is a cross section through one end of a conveyor idler roller showing a first embodiment of the bearing alarm system of the invention;
Fig. 1A is a detail view of the thermally actuated engagement element of Fig. 1 and part of its mounting, on an enlarged scale;
Fig. 2 is an end elevation of the roller of Fig. 1; and
Fig. 3 is a view similar to Fig. 1 of a conveyor drum with a second embodiment of the invention;
Fig. 4 is a detail sectional view corresponding to that of Fig. 1A;
Figs. 5 and 6 show a pedestal bearing provided with the bearing alarm system according to the present invention.

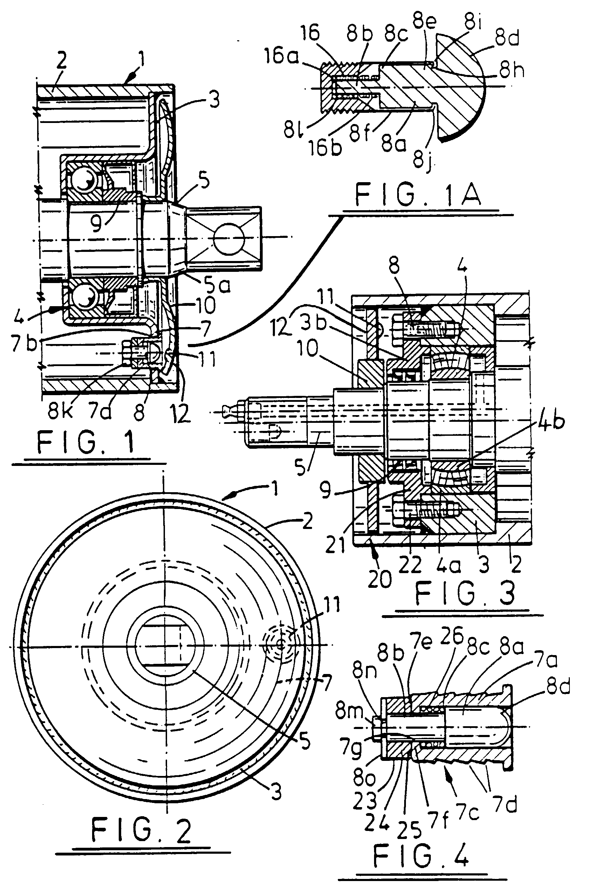

Fig. 1 shows a rotary mechanism in the form of a driveless idler roller generally indicated by reference number 1 such as is used to support the moving belt (not shown) of a belt conveyor. The roller 1 comprises a tubular member 2 having a stepped annular end support 3 rotatably mounted via rotary bearings 4 on a fixed shaft 5. At an axially and radially outer portion 7 of the support 3 is mounted a thermally activated engagement element 8 in the form of a pin having a short generally cylindrical body 8a with an elongate spindle 8b at one end 8c and a generally hemispherical head portion 8d at its other end 8e which head portion 8d is disposed outwardly of a tubular casing 8f. Axially inwardly of the hemispherical head portion 8d is the cylindrical body 8a which is separated from the head portion 8d by an annular groove 8h so as to form a shoulder 8i on said cylindrical body 8a for engagement with a lip 8j at the mouth of said casing 8f so as to yieldably retain the cylindrical portion 8a within said casing 8f in the primed condition of the element 8. The engagement element 8 is mounted so as to be in relatively good thermal connection with the bearing 4 through the support 3. In more detail it may be seen that the element 8 is secured with the end of a unit 8k in a small metal cup 7a which is a push fit inside an aperture 7b in the axially outer portion 7 of the support 3.

Immediately axially outwardly of the bearing 4 is mounted an annular seal 9 of a suitable natural or synthetic polymer (e.g. a rubber or polyalkene) for protecting the bearing 4 against the ingress of contaminants. Axially beyond the seal 9 is mounted on the shaft 5 an acoustic element in the form of an annular, partly dished or belled, plate 10 which has an axially inwardly extending dimple projection 11.

Under the normal operating conditions of the roller 1, the engagement element 8 is retained in its primed retracted position with the cylindrical portion 8a inside the casing 8f.The spindle 8b of the pin 8 has disposed concentrically therearound a memory coil spring 16 having one end 16a engaging the base 8l of the casing 8f, and its other end 16b against said one end 8c of the pin body 8a. Should the bearing 4 start to fail heat is generated which is transferred through the support 3 to the cup 7a and thence to the engagement element 8 mounted inside it. The memory spring 16 is formed and arranged so as to extend to its original size when an elevated temperature indicative of likely bearing failure and/or a likely fire hazard in the immediate environment, is reached. As the spring 16 extends and drives the engagement element cylindrical body shoulder 8i against the lip 8j of the casing 8f splaying it open and pushing the element head portion 8d out of the cup 7a into contact with the protrusion 11, to strike it once each revolution thereby causing a distinct acoustic signal which may be readily heard by any operating personnel in the vicinity. As may be seen in Fig. 1, the cup 7a has an outwardly turned lip which engages the support portion 7 around the aperture 7b at its axially outer side 7d thereby to restrain the cup 7a against being forced through the aperture 7b when the head 8d of the engagement element 8 strikes the dimple projection 11 on the acoustic plate 10.

It will be appreciated that the somewhat bell-shaped form of the acoustic plate helps to maximise the amplitude of the sound generated by the striking thereof with the engagement element head portion 8d. Furthermore the position of the acoustic plate 10 at the axially outer end 5a of the shaft 5 and outside the enclosed interior of the roller 1 helps to avoid loss of the sound through its being muffled inside the roller and any belt supported thereby in use of the roller, and thus helps to maximise the sound transmitted to the surrounding area and hence the ease and speed of detection of an alarm condition by any passing personnel.

Fig. 3 shows a generally similar form of the alarm system of the invention applied to a return roller or drum 20 for an endless conveyor belt installation and like parts corresponding to those in Figs. 1 and 2 are indicated by like reference numbers. It will be noted that in this case the support 3 between the tubular member 2 of the drum 20 and the radially outer bearing portion 4a, has secured thereto a sealing collar 21 for mounting of flexible annular seals 9 around the shaft 5 so as to prevent ingress of foreign matter to the bearing 4. The sealing collar 21 is secured to the support 3 by means of a plurality of bolts 22 one of which is conveniently replaced by a thermally actuated element 8 whose head is driven axially outwardly towards an acoustic plate 10 (not dished in this case) upon thermal actuation for periodic contacting with an opposed boss projection 11.

Fig. 4 is a detail sectional view corresponding to that of Fig. 1A of another form of thermally activated element in which like parts corresponding generally to those of Fig. 1A are indicated by like reference indicia. In this case the outside face 7c of the cup member 7a has a plurality of frusto-conical ring formations 7d forming a serrated surface which facilitates force fitting of the cup 7a in the aperture 7b in the end support 3 of the roller 1 whilst resisting withdrawal therefrom. The distal end 8m of the elongate spindle 8b has an annular groove 8n which is engaged by a retaining circlip 8o which abuts one end 23 of an annular spacer 24 whose other end 25 abuts the outside 7e of the cup base 7f, which has a central aperture 7g through which extends the pin spindle 8b. A compression spring 26 is disposed around the pin spindle 8b for acting between the one end 8c of the main body 8a of the pin and the base 7f of the cup 7a, so as to tend to urge the head 8d of the main pin body 8a outwardly of the cup 7a.

The annular spacer 24 is made of a low melting point (e.g. 80°C) alloy so that when the bearing overheats the spacer 24 melts and is displaced from between the refraining circlip 8o and the cup base 7f allowing the former to approach the latter as the pin body 8a is driven away from the cup base 7f by the expanding compression spring 26.

It will of course be appreciated that various different forms of thermally activated engagement element may also be used in the various embodiments. Moreover in the case of critical and/or larger components especially such as an end drum for a conveyor run, two or more engagement elements formed and arranged for activation at different, progressively higher, temperatures may be employed in order to signal different levels of overheating e.g. corresponding to early warning and imminent danger conditions.

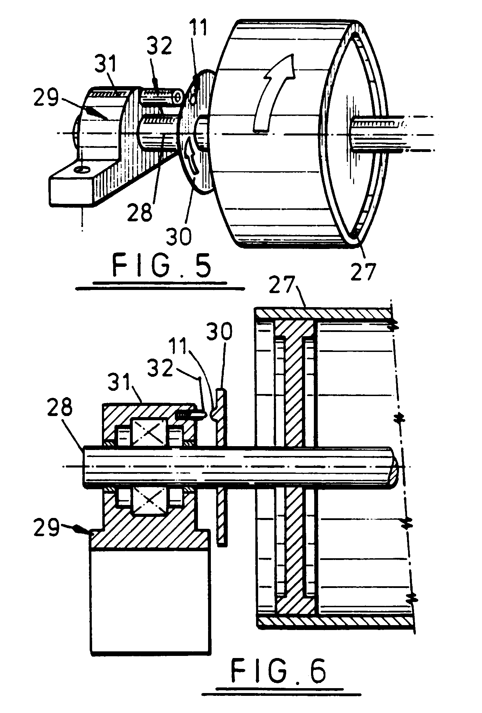

As indicated above, the thermally activated engagement element may be provided at or on either a fixed or moving bearing portion, the engaging portion being mounted at or on the other bearing portion i.e. the moving or fixed bearing portion, respectively, Figs 5 and 6 show a pedestal bearing provided with an overheat system of the present invention.

In more detail Fig.5. shows a drum 27 fixedly mounted on a shaft 28 which is rotatably supported via pedestal bearings 29 (only one shown). Also fixedly mounted on the shaft 28 externally of the drum 27, is an annular acoustic plate 30 constituting an engagement portion of the alarm system. The main fixed body 31 of the pedestal bearing 29 has fixedly mounted therein an elongate thermally activated engagement element 32 (somewhat similar to that of Fig.4) which projects axially outwardly of the pedestal bearing body 31 towards the acoustic plate 30. The engagement element 32 is formed and arranged to be supported clear of the plate in its primed retracted position and then to engage with a dimple projection 11 on the plate 30 in the tripped deployed condition of the engagement element 32.

## Claims

1. A rotatable bearing with an alarm system suitable for use in warning of overheating in the rotatable bearing (4, 29) and comprising first and second bearing portions(4a, 4b, 28,31), said alarm system comprising an alarm signal generator means (8, 12, 30, 32) having a thermally activated engagement element (8, 32) provided on at least one of said first bearing portion (4a, 31) and a body (2) connected thereto so as to be in thermal connection with said bearing portion (4a, 31) and provided with driving means (16, 26) for driving the element (8,32) upon reaching a predetermined elevated temperature, from a first primed retracted position into a second deployed extended alarm position for producing a distinctive signal
characterized in that at least one of said second bearing portion (4b, 28) and a body (5) connected thereto is provided with an engaging portion (12, 30), of the alarm system, the distance through which the driving means (16, 26) drives the engagement element (8,32) from the primed retracted position to the deployed extended alarm position, and the distance at which, in the primed retracted position, the engagement element (8, 32) is spaced from the engaging portion (12, 30), being such that, in the deployed extended alarm position, the engagement element (8, 32) makes at least intermittent contact with said engaging portion (12, 30) during relative rotation between said first and second bearing portions (4a, 4b, 28, 31) without substantially preventing continuing relative rotation of said bearing portions(4a, 4b, 28, 31), and is formed and arranged so as to produce from its contact with said engaging portion (12, 30) said distinctive alarm signal, indicating that said bearing has exceeded said predetermined temperature, wherein said engagement element (8, 32) is mounted for displacement between its retracted and extended positions, generally axially of the rotatable bearing.

2. A rotatable bearing with an alarm system according to claim 1 wherein said driving means comprises resilient biasing means (16, 26) formed and arranged for urging the engagement element (8, 32) from said primed position towards said alarm position.

3. A rotatable bearing with an alarm system according to claim 2 wherein said thermally activated engagement element (8, 32) is provided with thermal activation means in the form of a fusible element (24) formed and arranged for retaining said engagement element in said primed position, said fusible element being fusible at said predetermined elevated temperature thereby to release said engagement element so as to be deployed into said alarm position.

4. A rotatable bearing with an alarm system according to claim 2 wherein said thermally activated engagement element (8) is provided with thermal activation means in the form of a latch means of a material having shape memory characteristics formed and arranged for retaining said engagement element in said primed position, and changing its shape at said predetermined elevated temperature so as to deploy or allow deployment of, the element to its alarm position.

5. A rotatable bearing with an alarm system according to claim 1 wherein is provided a thermally variable configuration member having a first configuration at a normal bearing operating temperature, and a second, significantly different, configuration at and above said predetermined elevated temperature, for driving a distal portion thereof constituting said thermally activated engagement element from said first primed retracted position, corresponding to said first configuration, in which said engagement element is spaced from the engaging portion, into said second deployed alarm position, corresponding to said second configuration, in which said engagement element positively contacts said engaging portion.

6. A rotatable bearing with an alarm system according to claim 5 wherein said thermally variable configuration member has a first portion of a material having a first coefficient of expansion joined to a second portion of a second material having a second, different, coefficient of expansion so that the configuration of said member changes when the temperature thereof traverses said predetermined elevated temperature.

7. A rotatable bearing with an alarm system according to claim 6 wherein said thermally variable configuration member is a bimetallic strip

8. A rotatable bearing with an alarm system according to claim 5 wherein said thermally variable configuration member is of a material having configurational memory characteristics.

9. A rotatable bearing with an alarm system according to claim 8 wherein said thermally activated engagement element is of a plastics material having shape memory characteristics.

10. A rotatable bearing with an alarm system according to any one of claims 1 to 9 wherein said engaging portion (12)is in the form of at least one generally axially extending projection (11) which is periodically struck by the deployed thermally activated engagement element (8) in use of the system, as the bearing portions (4a, 4b) rotate relative to one another so as to provide said distinctive alarm signal.

11. A rotatable bearing with an alarm system according to claim 10 wherein at least one of said engagement element (8) and said projection (11) is resiliently deflectable upon striking therebetween so as to reduce wear thereof.

12. A rotatable bearing with an alarm system according to any one of claims 1 to 9 wherein said engaging portion (12) is in the form of an at least partially circumferentially extending surface which upon frictional contact with said engagement element (8) provides a distinctive screeching sound.

13. A rotatable bearing with an alarm system according to any one of claims 1 to 12 which includes alarm signal detection means, transmission means, and at least one of amplification means and electronic relay means.

14. A rotatable bearing with an alarm system according to claim 3 wherein said engaging portion (12, 30) comprises a generally axially extending projection (11) and said engagement element comprises a pin means (8a, 8b) mounted in a borehole with a resilient biasing means in the form of an axially compressible spring (26) disposed in the borehole for acting between the borehole and the pin means so as to urge the pin means in a direction outwardly of the borehole said pin means having a flexible distal end portion (8d) so that, upon release of the pin means by fusing of the fusible link (24) said flexible distal end portion of the pin means projects outwardly of the borehole for periodic striking engagement with said engaging portion (12, 30) thereby to produce a said distinctive alarm signal.

15. A rotatable bearing with an alarm system according to any one of claims 1 to 14 wherein at least one of said engagement element (8) and engaging portion (12) has an acoustic element (10) formed and arranged at a substantially external portion of the bearing portions (4a, 4b) and any said bodies connected thereto so as to transmit to the exterior of said bearing portions and any bodies connected thereto, upon contacting of the engaging portion (12) by the engagement element, a substantial acoustic distinctive alarm signal.

16. A rotatable bearing with an alarm system according to claim 15 wherein said acoustic element comprises a generally bell-shaped member (10) with at least one axially extending projection (11), together constituting said engaging portion (12).

17. A rotatable bearing with an alarm system according to any one of claims 1 to 16 wherein said bearing is a pedestal bearing.

18. An endless conveyor having a plurality of drive and/or idler rollers with rotatable bearings provided with alarm systems according to any one of claims 1 to 17.

## Patentansprüche

1. Drehbares Lager mit einem Warnsystem, das für ein Warnen vor einer Überhitzung im drehbaren Lager (4, 29) geeignet ist, und das erste und zweite Lagerteile (4a, 4b, 28, 31) aufweist, wobei das Warnsystem aufweist: einen Warnsignalgenerator (8, 12, 30, 32), der ein thermisches aktiviertes Eingriffselement (8, 32) besitzt, das an mindestens einem von erstem Lagerteil (4a, 31) und damit verbundenem Körper (2) so vorhanden ist, daß es eine thermische Verbindung mit dem Lagerteil (4a, 31) aufweist, und das mit der Antriebsvorrichtung (16, 26) für das Antreiben des Elementes (8, 32) beim Erreichen einer vorgegebenen erhöhten Temperatur, aus einer ersten zurückgezogenen Grundposition in eine zweite aufgerichtete, ausgestreckte Warnposition für die Erzeugung eines spezifischen Signals versehen ist;
dadurch gekennzeichnet, daß mindestens eines von zweitem Lagerteil (4b, 28) und damit verbundenem Körper (5) mit einem Eingriffsabschnitt (13, 30) des Warnsystems versehen ist: der Abstand, über den die Antriebsvorrichtung (16, 26) das Eingriffselement (8, 32) aus der zurückgezogenen Grundposition in die aufgerichtete, ausgestreckte Warnposition treibt, und der Abstand, den das Eingriffselement (8, 32) in der zurückgezogenen Grundposition vom Eingriffsabschnitt (12, 30) aufweist, so sind, daß das Eingriffselement (8, 32) in der aufgerichteten, ausgestreckten Warnposition mindestens einen intermettierenden Kontakt mit dem Eingriffsabschnitt (12, 30) während der relativen Drehung zwischen dem ersten und dem zweiten Lagerteil (4a, 4b, 28, 31) aufweist, ohne daß im wesentlichen eine fortgesetzte relative Drehung der Lagerteile (4a, 4b, 28, 31) verhindert wird; und es so ausgebildet und angeordnet ist, daß durch seinen Kontakt mit dem Eingriffsabschnitt (12, 30) ein spezifisches Warnsignal erzeugt wird, das anzeigt. wenn das Lager eine vorgegebene Temperatur überschritten hat, wobei das Eingriffselement (8. 32) für eine Verschiebung zwischen seiner zurückgezogenen und ausgestreckten Position im allgemeinen axial zum sich drehbaren Lager montiert ist.

2. Drehbares Lager mit einem Warnsystem nach Anspruch 1, bei dem die Antriebsvorrichtung eine elastische Vorspanneinrichtung (16, 26) aufweist, die so ausgebildet und angeordnet ist, daß das Eingriffselement (8, 32) aus der Grundposition in die Warnposition getrieben werden kann.

3. Drehbares Lager mit einem Warnsystem nach Anspruch 2, bei dem das thermisch aktivierte Eingriffselement (8, 32) mit einer thermischen Aktivierungseinrichtung in Form eines schmelzbaren Elementes (24) versehen ist, das so ausgebildet und angeordnet ist, daß das Eingriffselement in der Grundposition gehalten wird, wobei das schmelzbare Element bei der vorgegebenen erhöhten Temperatur schmelzbar ist, um dadurch das Eingriffselement so freizugeben, daß es in die Warnposition aufgerichtet wird.

4. Drehbares Lager mit einem Warnsystem nach Anspruch 2, bei dem das thermisch aktivierte Eingriffselement (8) mit einer thermischen Aktivierungseinrichtung in Form einer Klinke aus einem Material, das eine Formspeichercharakteristik aufweist, versehen ist, so ausgebildet und angeordnet, daß das Eingriffselement in der Grundposition gehalten wird, und so, daß es seine Form bei der vorgegebenen erhöhten Temperatur so verändert, daß das Element in seine Warnposition aufgerichtet oder eine Aufrichtung gestattet wird.

5. Drehbares Lager mit einem Warnsystem nach Anspruch 1, bei dem ein Element mit einer thermisch veränderlichen Konfiguration vorhanden ist, das eine erste Konfiguration bei der normalen Betriebstemperatur des Lagers und eine zweite bedeutend abweichende Konfiguration bei der vorgegebenen erhöhten Temperatur und darüber hinaus aufweist, um einen distalen Abschnitt dieses, der das thermisch aktivierte Eingriffselement bildet. aus einer ersten zurückgezogenen Grundposition entsprechend der ersten Konfiguration, bei der das Eingriffselement einen Abstand vom Eingriffsabschnitt aufweist, in eine zweite aufgerichtete Warnposition entsprechend der zweiten Konfiguration, bei der das Eingriffselement zwangläufig den Eingriffsabschnitt berührt, anzutreiben.

6. Drehbares Lager mit einem Warnsystem nach Anspruch 5, bei dem das Element mit einer thermisch veränderlichen Konfiguration einen ersten Abschnitt aus einem Material aufweist, das einen ersten Ausdehnungskoeffizienten zeigt, und der mit einem zweiten Abschnitt aus einem zweiten Material verbunden ist, das einen zweiten abweichenden Ausdehnungskoeffizienten zeigt, so daß sich die Konfiguration des Elementes verändert, wenn dessen Temperatur über eine vorgegebene erhöhte Temperatur hinausgeht.

7. Drehbares Lager mit einem Warnsystem nach Anspruch 6, bei dem das Element mit einer thermisch veränderlichen Konfiguration ein Bimetallstreifen ist.

8. Drehbares Lager mit einem Warnsystem nach Anspruch 5. bei dem das Element mit einer thermisch veränderlichen Konfiguration aus einem Material besteht, das eine Formspeichercharakteristik aufweist.

9. Drehbares Lager mit einem Warnsystem nach Anspruch 8, bei dem das thermisch aktivierte Eingriffselement aus einem Kunststoff besteht, der eine Formspeichercharakteristik aufweist.

10. Drehbares Lager mit einem Warnsystem nach einem der Ansprüche 1 bis 9, bei dem der Eingriffsabschnitt (12) in der Form von mindestens einem sich im allgemeinen axial erstreckenden Vorsprung (11) vorliegt, der periodisch durch das aufgerichtete, thermisch aktivierte Eingriffselement (8) bei Anwendung des Systems getroffen wird, während sich die Lagerteile (4a. 4b) relativ zueinander so drehen, daß ein spezifisches Warnsignal geliefert wird.

11. Drehbares Lager mit einem Warnsystem nach Anspruch 10, bei dem mindestens eines von Eingriffselement (8) und Vorsprung (11) beim Auftreffen elastisch durchbiegbar ist, so daß deren Verschleiß verringert wird.

12. Drehbares Lager mit einem Warnsystem nach einem der Ansprüche 1 bis 9, bei dem der Eingriffsabschnitt (12) in der Form einer sich mindestens teilweise peripher erstreckenden Fläche vorliegt, die beim Reibungskontakt mit dem Eingriffselement (8) einen spezifischen kreischenden Ton liefert.

13. Drehbares Lager mit einem Warnsystem nach einem der Ansprüche 1 bis 12, das eine Nachweiseinrichtung für das Warnsignal, eine Übertragungseinrichtung und mindestens einen von Verstärkunger und elektronischem Relais umfaßt.

14. Drehbares Lager mit einem Warnsystem nach Anspruch 3, bei dem der Eingriffsabschnitt (12. 30) einen sich im allgemeinen axial erstreckenden Vorsprung (11) und das Eingriffselement einen Stift (8a, 8b) aufweist, der in einem Bohrloch mit einer elastischen Vorspanneinrichtung in der Form einer axial zusammendrückbaren Feder (26) montiert ist, die im Bohrloch angeordnet ist, um zwischen dem Bohrloch und dem Stift zur Wirkung zu kommen, um den Stift in eine Richtung nach außen vom Bohrloch zu treiben, wobei der Stift einen flexiblen distalen Endabschnitt (8d) aufweist. so daß beim Freigeben des Stiftes durch Schmelzen der schmelzbaren Verbindung (24) der flexible distale Endabschnitt des Stiftes nach außen aus dem Bohrloch herausragt, um periodisch auf den Ei ngri ffsabschnitt (12, 30) aufzutreffen, wodurch ein spezifisches Warnsignal erzeugt wird.

15. Drehbares Lager mit einem Warnsystem nach einem der Ansprüche 1 bis 14, bei dem mindestens eines von Eingriffselement (8) und Eingriffsabschnitt (12) ein akustisches Element (10) aufweist. das am im wesentlichen äußeren Abschnitt der Lagerteile (4a. 4b) und irgendwelchen damit verbundenen Körpern ausgebildet und so angeordnet ist, daß zur Außenseite der Lagerteile und irgendwelcher damit verbundener Körper beim Kontakt des Eingriffsabschnittes (12) mit dem Eingriffselement ein im wesentlichen spezifisches akustisches Warnsignal übertragen wird.

16. Drehbares Lager mit einem Warnsystem nach Anspruch 15, bei dem das akustische Element ein im allgemeinen glockenförmiges Element (10) mit mindestens einem sich axial erstreckenden Vorsprung (11) aufweist, die zusammen den Eingriffsabschnitt (12) bilden.

17. Drehbares Lager mit einem Warnsystem nach einem der Ansprüche 1 bis 16, bei dem das Lager ein Stehlager ist.

18. Endloses Förderband, das eine Vielzahl von Antriebsrollen und/oder Tragrollen mit drehbaren Lagern aufweist, die mit Warnsystemen nach einem der Ansprüche 1 bis 17 versehen sind.

## Revendications

1. Palier rotatif comportant un système d'alarme pouvant servir d'avertissement en cas d'une surchauffe dans le palier rotatif (4, 29) et comprenant des premières et deuxièmes parties de palier (4a, 4b, 28, 31), ledit système d'alarme comprenant un moyen générateur d'un signal d'alarme (8, 12, 30, 32) comportant un élément d'engagement à actionnement thermique (8, 32) agencé sur au moins une desdites premières parties du palier (4a, 31) et un corps (2), qui y est connecté, de sorte à être en connexion thermique avec ladite partie du palier (4a, 31), et comportant un moyen d'entraînement (16, 26) pour entraîner l'élément (8, 32) lors de l'atteinte d'une température élevée prédéterminée, d'une première position rétractée d'origine vers une deuxième position d'alarme étendue et déployée pour produire un signal distinctif;
caractérisé en ce qu'au moins une desdites deuxièmes parties de palier (4b, 28) et un corps (5) qui y est connecté, comporte une partie d'engagement (12, 30) du système d'alarme, la distance sur laquelle l'élément d'entraînement (16, 26) entraîne l'élément d'engagement (8, 32) de la position rétractée d'origine vers la position d'alarme étendue et déployée, et la distance de laquelle est espacé l'élément d'engagement (8, 32) dans la position rétractée d'origine de la partie d'engagement (12, 30) étant telles que dans la position d'alarme étendue et déployée l'élément d'engagement (8. 32) établit au moins un contact intermittent avec ladite partie d'engagement (12, 30) au cours de la rotation relative entre lesdites premières et deuxièmes parties du palier (4a, 4b, 28, 31), sans empêcher essentiellement la poursuite de la rotation relative desdites parties du palier (4a, 4b, 28, 31), et est formé et agencé de sorte à émettre ledit signal d'alarme distinctif lors de son contact avec ladite partie d'engagement (12, 30), indiquant que ledit palier a dépassé ladite température prédéterminée. ledit élément d'engagement (8, 32) étant monté de sorte à pouvoir se déplacer entre ses positions rétractée et étendue, en général de façon axiale par rapport au palier rotatif.

2. Palier rotatif comportant un système d'alarme selon la revendication 1, dans lequel ledit moyen d'entraînement comprend un moyen poussoir élastique (16, 26), formé et agencé de sorte à pousser l'élément d'engagement (18, 32) de ladite position d'origine vers ladite position d'alarme.

3. Palier rotatif comportant un système d'alarme selon la revendication 2, dans lequel l'élément d'engagement à actionnement thermique (8, 32) comporte un moyen d'actionnement thermique sous forme d'un élément fusible (24), formé et agencé de sorte à retenir ledit élément d'engagement dans ladite position d'origine, ledit élément fusible étant fusible à ladite température élevée prédéterminée, pour relâcher ainsi ledit élément d'engagement de sorte à le déployer dans ladite position d'alarme.

4. Palier rotatif comportant un système d'alarme selon la revendication 2, dans lequel l'élément d'engagement à actionnement thermique (8) comporte un moyen d'actionnement thermique sous forme d'un moyen de loquet composé d'un matériau possédant des caractéristiques de mémoire de forme, formé et agencé de sorte à retenir ledit élément d'engagement dans ladite position d'origine, et changeant sa forme en présence de ladite température élevée prédéterminée pour déployer l'élément dans sa position d'alarme ou permettre son déploiement correspondant.

5. Palier rotatif comportant un système d'alarme selon la revendication 1, comportant un élément de configuration à variation thermique ayant une première configuration en présence d'une température de service normale du palier et une deuxième configuration, nettement différente, en présence de ladite température élevée prédéterminée et d'une température supérieure à celle-ci, pour entraîner une partie distale correspondante constituant ledit élément d'engagement à actionnement thermique, de ladite première position d'origine rétractée, correspondant à ladite première configuration. dans laquelle ledit élément d'engagement est espacé de la partie d'engagement, dans ladite deuxième position d'alarme déployée, correspondant à ladite deuxième configuration, dans laquelle ledit élément d'engagement contacte de façon positive ladite partie d'engagement.

6. Palier rotatif comportant un système d'alarme selon la revendication 5, dans lequel ledit élément de configuration à variation thermique comporte une première partie en un matériau ayant un premier coefficient d'expansion, assemblée à une deuxième partie en un deuxième matériau ayant un deuxième coefficient d'expansion différent, de sorte que la configuration dudit élément change lorsque la température correspondante traverse ladite température élevée prédéterminée.

7. Palier rotatif comportant un système d'alarme selon la revendication 5, dans lequel ledit élément de configuration à variation thermique est une bilame.

8. Palier rotatif comportant un système d'alarme selon la revendication 5, dans lequel ledit élément de configuration à variation thermique est composé d'un matériau possédant des caractéristiques de mémoire de configuration.

9. Palier rotatif comportant un système d'alarme selon la revendication 8, dans lequel ledit élément d'engagement à actionnement thermique est composé d'une matière plastique possédant des caractéristiques de mémoire de forme.

10. Palier rotatif comportant un système d'alarme selon l'une quelconque des revendications 1 à 9, dans lequel ladite partie d'engagement (12) a la forme d'au moins une saillie à extension généralement axiale (11). heurtée régulièrement par l'élément d'engagement à actionnement thermique déployé (8) pendant le fonctionnement du système, lors de la rotation relative des parties de palier (4a. 4b), en vue de l'émission dudit signal d'alarme distinctif.

11. Palier rotatif comportant un système d'alarme selon la revendication 10, dans lequel au moins.un dudit élément d'engagement (8) et de ladite saillie (11) peut être défléchi élastiquement lors du heurt correspondant, de sorte à réduire l'usure.

12. Palier rotatif comportant un système d'alarme selon l'une quelconque des revendications précédentes, dans lequel ladite partie d'engagement (12) a la forme d'une surface s'étendant au moins partiellement autour de la circonférence. émettant, lors du contact par frottement avec ledit élément d'engagement (8). un bruit de grincement distinctif.

13. Palier rotatif comportant un système d'alarme selon l'une quelconque des revendications 1 à 12, englobant un moyen de détection du signal d'alarme. un moyen de transmission et au moins un moyen d'amplification ou un moyen de relais électronique.

14. Palier rotatif comportant un système d'alarme selon la revendication 3, dans lequel ladite partie d'engagement (12, 30) comprend une saillie à extension généralement axiale (11), ledit élément d'engagement comprenant un moyen de broche (8a, 8b), monté dans un trou de forage avec un moyen poussoir élastique sous forme d'un ressort à compression axiale (26). agencé dans le trou de forage pour agir entre le trou de forage et le moyen de broche. de sorte à pousser le moyen de broche dans une direction vers l'extérieur du trou de forage, ledit moyen de broche comportant une partie d'extrémité distale flexible (8d), de sorte que lors du relâchement du moyen de broche par suite de la fusion de la liaison fusible (24), ladite partie d'extrémité flexible du moyen de broche déborde vers l'extérieur du trou de forage en vue d'un engagement par heurt périodique dans ladite partie d'engagement (12, 30), pour émettre ainsi un dit signal d'alarme distinctif.

15. Palier rotatif comportant un système d'alarme selon l'une quelconque des revendications 1 à 14, dans lequel au moins un dudit élément d'engagement (8) et de ladite partie d'engagement (12) comporte un élément acoustique (10), formé et agencé au niveau d'une partie essentiellement externe des parties de palier (4a, 4b) et des quelconques corps qui y sont connectés, de sorte à transmettre vers l'extérieur desdites parties de palier et des quelconques corps qui y sont connectés, lors du contact entre la partie d'engagement (12) et l'élément d'engagement, un signal d'alarme acoustique distinctif et important.

16. Palier rotatif comportant un système d'alarme selon la revendication 15, dans lequel ledit élément acoustique comprend un élément généralement en forme de cloche (10) avec au moins une saillie à extension axiale (11), constituant ensemble ladite partie d'engagement (12).

17. Palier rotatif comportant un système d'alarme selon l'une quelconque des revendications 1 à 16, dans lequel ledit palier est une chaise palier.

18. Transporteur sans fin comportant plusieurs galets d'entraînement et/ou tendeurs avec des paliers rotatifs comportant des systèmes d'alarme selon l'une quelconque des revendications 1 à 17.
